# EUROPÄISCHE PATENTSCHRIFT

(11) **EP 0 995 528 B1**
(45) Veröffentlichungstag und Bekanntmachung des Hinweises auf die Patenterteilung: **06.05.2004**
(21) Anmeldenummer: 99118133.0
(22) Anmeldetag: 11.09.1999
(51) Int. Cl.: B23C 5/22

(54) **Wendeplattenfräser**
Milling cutter with indexable cutting inserts
Fraise avec des plaquettes de coupe indexables

(30) Priorität: 17.10.1998 DE 19848045
(43) Veröffentlichungstag der Anmeldung: 26.04.2000
(73) Patentinhaber: Fette GmbH, 21493 Schwarzenbek (DE)
(72) Erfinder: Oppelt, Klaus, 21481 Lauenburg (DE); Bentjens, Bernd, 21493 Schwarzenbek (DE)
(74) Vertreter: Patentanwälte Hauck, Graalfs, Wehnert, Döring, Siemons, Schildberg

(56) Entgegenhaltungen:
- DE-C- 4 304 071
- US-A- 4 189 264
- US-A- 4 682 916

## Beschreibung

Die Erfindung bezieht sich auf einen Wendeplattenfräser nach dem Oberbegriff des Patentanspruchs 1.

Aus DE 43 04 071 ist ein Wendeplatten-Planfräser bekanntgeworden, bei dem die Fräswendeplatten in Plattensitzen angeordnet sind, die in Spankammern des Fräskörpers ausgebildet sind. Der Plattensitz und die Fräswendeplatte sind so angeordnet, daß ein negativer radialer Winkel des Plattensitzes, ein negativer axialer Winkel des Plattensitzes und ein positiver effektiver Spanwinkel jeweils 12° bis 18°, vorzugsweise 15° betragen. Trotz des großen effektiven Spanwinkels ergibt sich für die Wendeplatten ein stabiler Querschnitt, da die Seitenflächen (Freiflächen) rechtwinklig zur Auflagefläche verlaufen können. Die Spankammern sind relativ kurz. Sie können daher mit relativ kurzen Fräswerkzeugen eingearbeitet werden, was den Herstellungsaufwand klein hält. Die Geometrie der Spankammem ermöglicht darüber hinaus eine kleinere Teilung des Planfräsers, d.h. eine höhere Schneidenzahl. Schließlich können die Bohrungen im Werkzeughalter zur Befestigung der Wendeplatten verhältnismäßig lang ausgeführt werden. Dadurch wird die Sicherheit des Plattensitzes weiter erhöht..

Beim Hochgeschwindigkeitsfräsen wird die Befestigung von Wendeplatten sehr stark belastet. Es besteht dabei die Gefahr, daß die hohen Fliehkräfte Schraubbefestigungen lösen bzw. zum Abscheren der Spannschrauben führen. Unabhängig davon wird eine Befestigung der Wendeplatte durch die Schneidkräfte stark beansprucht, vor allem bei einem negativen Einbauwinkel.

Der Erfindung liegt daher die Aufgabe zugrunde, einen Wendeplattenfräser zu schaffen, bei dem die Wendeplatten so im Fräskörper angeordnet und befestigt sind, daß sie hohen Schneid- und Fliehkräften standzuhalten vermögen.

Diese Aufgabe wird durch die Merkmale des Patentanspruchs 1 gelöst.

Bei dem erfindungsgemäßen Fräser weist die Wendeplatte rückseitig auf der Schneidkantenseite einen erhabenen länglichen im Querschnitt keilförmigen Stützabschnitt auf mit einer unteren Stützfläche, wobei die beabstandeten Stützflächen auf der Rückseite der Wendeplatte parallel verlaufen. Im Plattensitz ist angrenzend an die Auflagerfläche, welche die radiale Belastung der Platte auffängt und gegen die somit die Seitenfläche der Wendeplatte anliegt, eine Ausnehmung geformt mit Flächen annähernd parallel zur zweiten Auflagerfläche. Die Ausnehmung ist im Querschnitt komplementär zum Querschnitt der Stützabschnitte geformt derart, daß der Stützabschnitt annähernd formschlüssig. in der Ausnehmung aufgenommen ist und die Wendeplatte beim Anziehen der Befestigungsschraube aufgrund der Keilwirkung gegen die zweite Auflagerfläche gedrückt wird, während sich die Stützfläche des anderen Stützabschnitts gegen einen radial äußeren Abschnitt der ersten Auflagerfläche anlegt.

Mit anderen Worten, die radiale Auflagerfläche bildet zusammen mit einer Keilfläche der Ausnehmung die Möglichkeit einer formschlüssigen Verbindung mit dem komplementär geformten Stützabschnitt. Infolge der Keilwirkung wird bei Anziehen der Befestigungsschraube eine Kraftkomponente gegen die radiale Anlagefläche erzeugt. Dadurch wird die Wendeplatte im Trägerkörper zentriert und gegen radiales Wandern nach außen wirksam gesichert.

Die rückseitige Stützfläche des jeweils anderen Stützabschnitts liegt dabei auf der ersten Auflagerfläche des Fräserkörpers auf. Die Wendeplatte hat daher einen brückenartigen Querschnitt an der Rückseite. Die Wendeplatte ist daher relativ breit abgestützt.

Die erfindungsgemäße Konstruktion weist mehrere Vorteile auf. Die Wendeplatte kann unter einem relativ großen negativen Einbauwinkel angeordnet werden. Dadurch ergibt sich eine günstige Spankammer mit relativ kleinem Volumen, das ermöglicht, daß ein enger Zahnteilungswinkel erhalten werden kann, d.h. eine große Schneidenzahl am Umfang des Fräsers. Gleichwohl wird verhindert, daß die Wendeplatte durch Schnittkräfte herausgezogen wird.

Trotz enger Zahnteilung können vergleichsweise stabile Wendeplattenquerschnitte mit großen positiven Freiwinkeln und Spanwinkeln eingesetzt werden.

Ein weiterer Vorteil ist die gute Bearbeitbarkeit der Plattensitze (bei großem negativem Einbauwinkel). Es können relativ kurze und stabile Bearbeitungswerkzeuge mit geringen Ausspannlängen eingesetzt werden.

Der Zentriereffekt des beschriebenen Spannsystems sorgt dafür, daß die Wendeplatten zwangsläufig mit hoher Rundlaufgenauigkeit gespannt werden können. Ein Verdrehen der Wendeplatte oder radiales Verschieben ist ausgeschaltet, und zwar sowohl während des Spannvorgangs als auch bei Schnittbelastung im Einsatz. Neben der erhöhten Spannsicherheit ergeben sich als Nebeneffekt Vorteile beim Wenden oder Wechseln der Wendeplatten. Beim Spannvorgang ist die Wendeplatte nur noch in axialer Richtung gegen die Anlage des Plattensitzes zu schieben.

Der Hauptvorteil der erfindungsgemäßen Konstruktion ist jedoch die große Festigkeit des Sitzes der Wendeplatte im Hinblick auf angreifende Schnittkräfte und hohe Fliehkräfte.

Die radiale Anlagefläche in der Ausnehmung einerseits und die radiale Anlagefläche für die Seitenwandung der Wendeplatte andererseits können von unterschiedlichen Flächen gebildet sein. Nach einer Ausgestaltung der Erfindung ist es jedoch vorteilhaft, wenn die zweite Auflagerfläche eine Wand der Ausnehmung bildet.

Wie schon erwähnt, ist der Rücken der Wendeplatte im Querschnitt vorzugsweise trapezförmig. Der Plattensitz kann an der der Rückseite zugewandten ersten Auflagerseite einen rechteckigen Sockel in Form eines Pyramidenstumpfes aufweisen, der um die Gewindebohrung herum geformt ist und dessen zur zweiten Auflagerfläche hin gerichtete Wand die die Keilfläche bildende Wand der Ausnehmung darstellt.

In Entsprechung zur obigen Ausführungsform kann die Rückseite der Wendeplatte als rechteckiger Rahmen ausgebildet sein, von denen zwei gegenüberliegende Seiten die Stützabschnitte bilden und die Stützflächen aufweisen. Die Rahmen verbinden die Stützabschnitte miteinander und stabilisieren somit die Wendeplatte gegen unerwünschte Verformungen.

Nach einer weiteren Ausgestaltung der Erfindung weist die Spankammer eine axiale dritte Auflagerfläche auf, gegen die eine Stirnseite der Wendeplatte zur Anlage gelangt. Eine derartige Auflagerfläche ist jedoch bei Wendeplattensitzen in Fräskörpern an sich bekannt.

Nach einer weiteren Ausgestaltung der Erfindung ist die Achse der Gewindebohrung so angeordnet, daß die Befestigungsschraube die Wendeplatte gegen die dritte Auflagerfläche andrückt. Dadurch ist die Wendeplatte gegen die dritte Auflagerfläche vorgespannt.

Die Wendeplatte wird im Fräskörper vorzugsweise mit einem relativ großen positiven Axialwinkel eingebaut, die Freifläche der Wendeplatte der Hauptschneidkante ist nach einer anderen Ausgestaltung der Erfindung vorzugsweise ballig. Die Spanfläche ist nach einer anderen Ausgestaltung der Erfindung in Form einer Hohlkehle ausgeführt.

Nach einer anderen Ausgestaltung der Erfindung kann die Wendeplatte an den Stirnseiten eine Nebenschneidkante aufweisen mit Eckradius und Planfase.

Ausführungsbeispiele der Erfindung werden nachfolgend anhand von Zeichnungen näher erläutert.
- Fig. 1: zeigt einen Schnitt durch einen Teil eines Fräskörpers eines Wendeplattenfräsers nach einem Ausführungsbeispiel der Erfindung.
- Fig. 2: zeigt eine ähnliche Darstellung wie Fig. 1 zur Veranschaulichung des Fertigungsvorgangs.
- Fig. 3: zeigt eine ähnliche Darstellung wie Fig. 2, jedoch für einen herkömmlichen Wendeplattenfräser.
- Fig. 4: zeigt die Lage der Wendeplatte nach einem Ausführungsbeispiel der Erfindung zur Fräserachse.

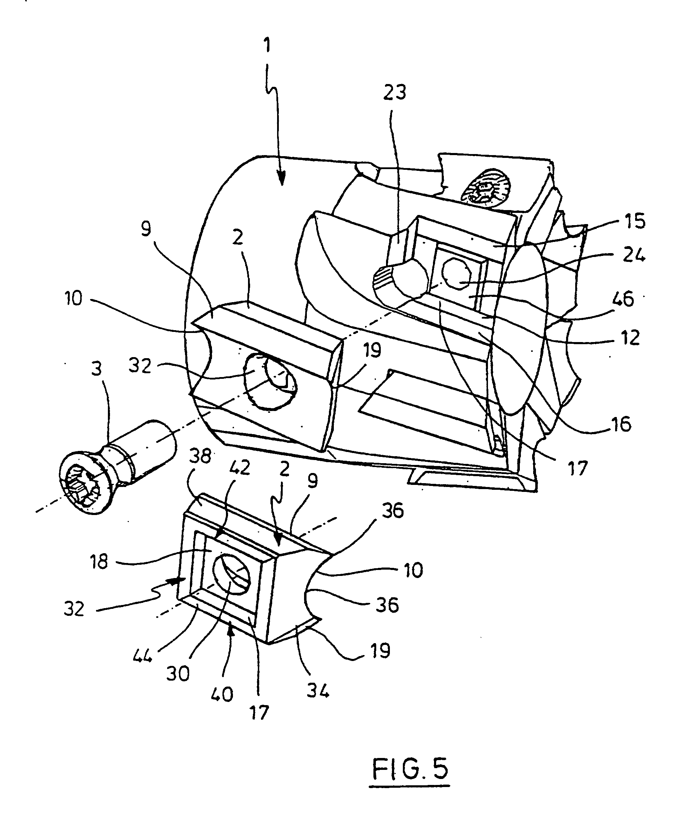

- Fig. 5: zeigt eine perspektivische Explosionsdarstellung des Wendeplattenfräsers nach der Erfindung.
- Fig. 6: zeigt unterschiedliche Einbaulagen der Wendeplatte im Wendeplattenfräser nach einem Ausführungsbeispiel der Erfindung.

In den Figuren ist ein schaftartiger Fräskörper 1 vorgesehen für einen Eckfräser, der an einem Ende in Umfangsabständen Spankammern 14 aufweist, die Plattensitze für Wendeplatten 2 enthalten. Die Wendeplatte 2 hat eine mittige Durchbohrung 30, eine Rückseite, die als rechteckiger Rahmen 32 geformt ist, zwei gegenüberliegende Stirnseiten 34 sowie eine Vorderseite 36, die als Hohlkehle geformt ist. Die Seiten der Wendeplatte 2 weisen eine Freifläche 9 auf, die mit einer Spanfläche 10, die Bestandteil der Hohlkehle 36 ist, eine Schneide oder Schneidkante 36 bildet. Die unterhalb der Freifläche 9 liegende Seitenfläche 38 bildet eine Anlagefläche für die Anlage gegen eine Auflagerfläche 16 des Plattensitzes, worauf weiter unten noch eingegangen wird.

Mit 19 ist eine Nebenschneide bezeichnet, die einen Eckradius und eine Planfase hat zur Erzielung guter Oberflächen. Für den vorliegenden Zusammenhang ist sie jedoch von geringerer Bedeutung.

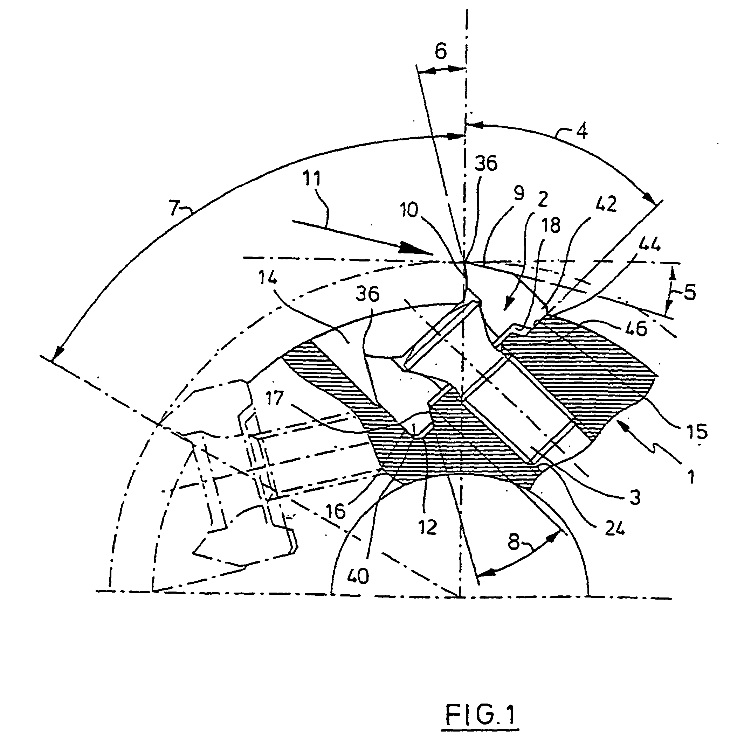

Der in Fig. 1 dargestellte Querschnitt der Wendeplatte 2 ergibt an der Rückseite eine trapezförmige Ausnehmung 18, so daß an der Rückseite der Wendeplatte zwei beabstandete Stützabschnitte 40, 42 gebildet sind mit hinteren Stützflächen 15, die parallel und in einer Ebene verlaufen. Die Querverbindungen der Stützabschnitte 40, 42 an den Enden über die anderen Abschnitte. des Rahmens 32 dienen der Stabilität.

Wie erkennbar ist die Wendeplatte 2 bezüglich ihrer Längsachse symmetrisch geformt. Sie ist mithin eine zweischneidige Wendeplatte.

Der Plattensitz der Spankammer 14 weist eine erste Auflagerfläche 15 in Form einer länglichen schmalen Fläche an der radialen Außenseite der Spankammer 14 auf. Ferner ist eine zweite radiale Auflagerfläche 16 geformt, die sich im Abstand und in einem Winkel zur ersten Auflagerfläche 15 erstreckt. Sie dient der Anlage der Seitenfläche 38 der Wendeplatte 2. Die zweite Auflagerfläche 16 ist die Wand einer im Querschnitt trapezförmigen Ausnehmung 12. Die andere Wand der Ausnehmung 12 wird von einer keilförmigen Fläche 17 geformt, die Teil eines quadratischen oder rechteckigen, pyramidenstumpfartigen Sockels 46 ist, der eine Gewindebohrung 24 aufweist. Die Gewindebohrung 24 dient zur Aufnahme einer Befestigungsschraube 3, die durch die Bohrung 32 der Wendeplatte 2 hindurchgeführt wird und diese am Plattensitz befestigt. Hierbei greift einer der beiden Stützabschnitte 40 formschlüssig in die Ausnehmung 12, während der andere Stützabschnitt mit seiner Stützfläche 44 gegen die Auflagerfläche 15 des Fräskörpers 1 zur Anlage gelangt. Der Querschnitt der Wendeplatte 2 ist daher brückenförmig. Aufgrund der Keilwirkung der Keilfläche 17 und der entsprechenden keilförmigen Ausbildung des Stützabschnitts 40 wird der Stützabschnitt in der Ausnehmung 12 wirksam festgelegt. Gleichzeitig erfolgt eine feste Anlage an der zweiten Auflagerfläche 16. Dadurch ist. die Wendeplatte 2 sicher gehalten, vor allen Dingen gegenüber radialen Kräften, welche die Befestigungsschraube 3 auf Scherung und Biegung belasten. Die Wendeplatte 2 liegt außerdem an einer dritten Auflagerfläche 23 an, die die axiale Auflagerfläche darstellt und gegen die die Wendeplatte 2 geschoben wird, bevor sie mit Hilfe der Befestigungsschraube angezogen wird. Die Achse der Gewindebohrung 24 ist so gelegt, daß die Wendeplatte 2 gegen die axiale Auflagerfläche 23 vorgespannt wird. Zwischen dem Sockel 46 und dem Boden der Ausnehmung 18 der Wendeplatte 2 besteht ein Abstand. Die Zentrierung der Wendeplatte 2 findet daher im wesentlichen über den Eingriff eines Stützabschnitts 40 mit der Ausnehmung 12 statt. Dieser Eingriff hat jedoch zur Folge, daß hohe radiale oder nach außen wirkende Kräfte aufgrund von Fliehkräften und von Schnittkräften aufgenommen werden können.

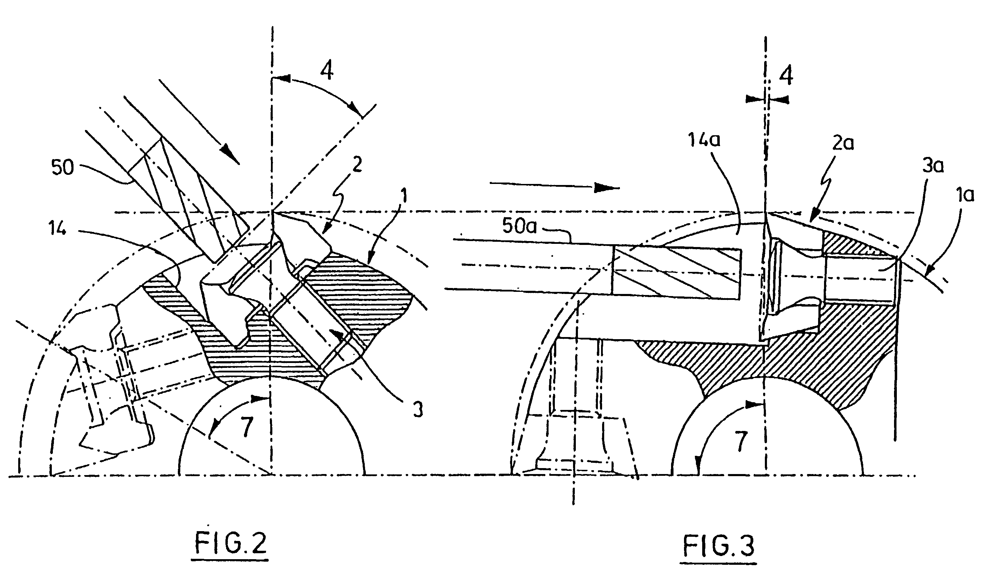

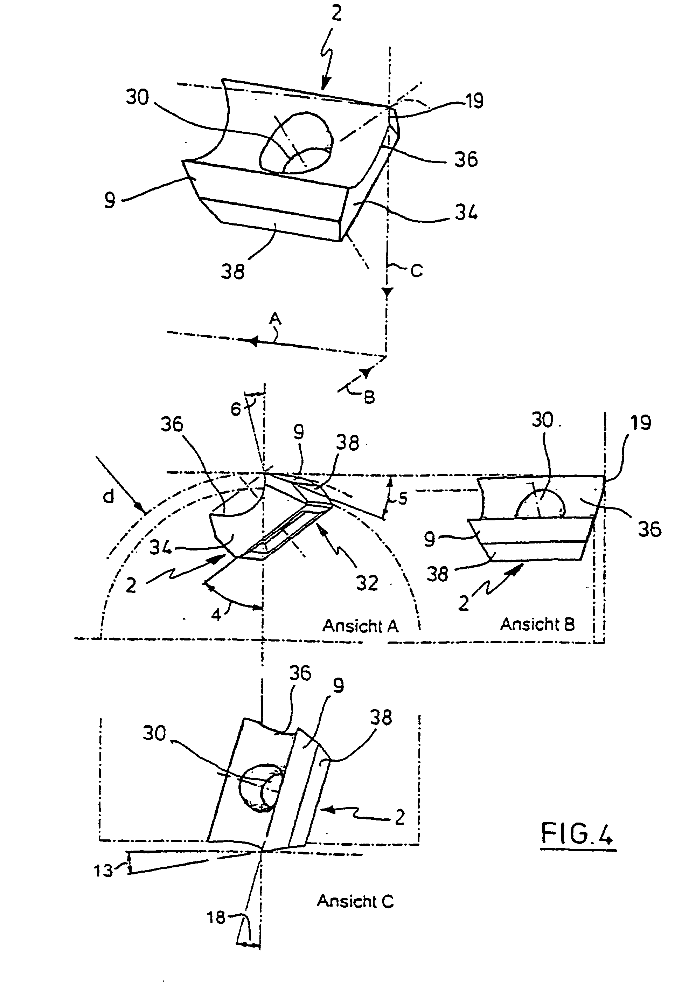

Fig. 2 zeigt noch einmal. eine.ähnliche Anordnung eines Fräsers und einer Wendeplatte wie Fig. 1. Ferner ist ein Fräswerkzeug 50 angedeutet zur Herstellung der Spankammer 14. Man erkennt, daß eine viel kürzere Werkzeuglänge erforderlich ist, um die Spankammer 14 zu fertigen als zum Beispiel beim Werkzeug 50a nach Fig. 3, in der ein herkömmlicher Eckfräser dargestellt ist, wie er etwa durch die DE 43 04 071 bekanntgeworden und weiter oben beschrieben ist.

Fig. 4 zeigt die Anordnung der Wendeplatte 2 im Hinblick auf die Achsen A, B und C des Fräsers. A ist die Längsachse des Schaftes 1 und zugleich die Drehachse. In Fig. 4 ist der Einbauwinkel 4 der Wendeplatte 2 im. Fräskörper 1 zu erkennen. Der Einbauwinkel beträgt im vorliegenden Fall zwischen 35 und 45°. Die dadurch ermöglichte enge Zahnteilung ergibt sich aus dem Zahnteilungswinkel 7 nach Fig. 1.

Aus Fig. 4 geht auch die Geometrie der Wendeplatte hervor. Es liegt ein großer Freiwinkel 5 vor, ein großer Spanwinkel 6 und ein großer Stirnfreiwinkel 13. Die Wendeplatte 2 ist zum Beispiel geschliffen. Der große positive Axialwinkel 18 (Drall) ergibt sich durch die bei enger Zahnteilung zwangsläufig klein anfallenden Spankammern 14. Gleichwohl werden die Späne axial wendelförmig ausreichend wirksam abgeführt.

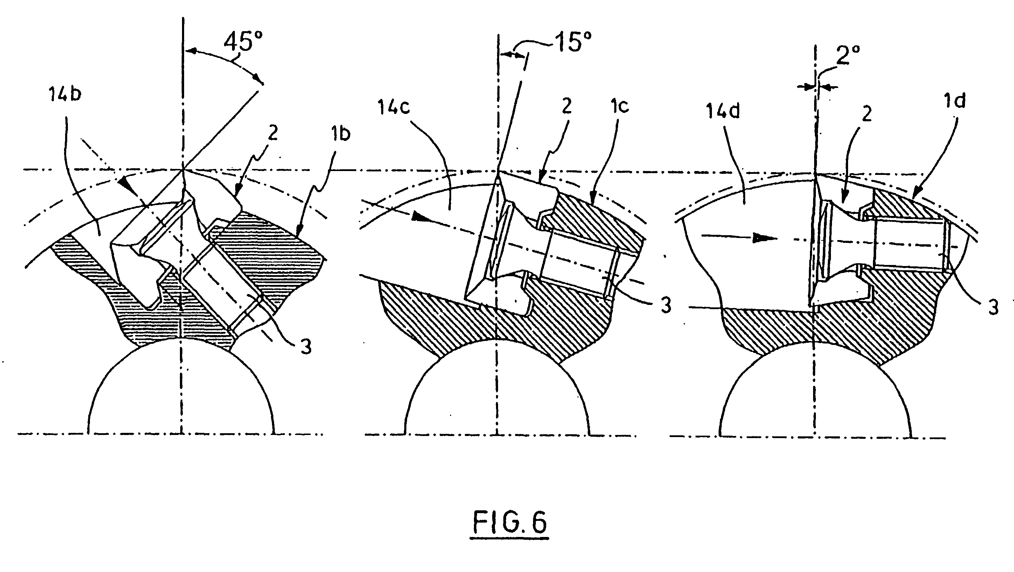

In Fig. 6 sind in einem Schnitt eines Teils eines Fräsers nach der Erfindung identische Wendeplatten 2 dargestellt, die jedoch unterschiedliche Anlagewinkel aufweisen bei etwa gleich großem Schnittwinkel. In der linken Darstellung von Fig. 6 ist der Winkel 45°, in der mittleren Darstellung 15 und in der rechten Darstellung 2°. In allen Fällen bewirkt die formschlüssige Spannung hohe Spannsicherheit, besonders gegen radial nach außen wirkende Kräfte.

## Patentansprüche

1. Wendeplattenfräser mit einem Fräskörper, der am Umfang beabstandete Spankammern aufweist, in denen Plattensitze für Wendeschneidplatten geformt sind, und in einer Gewindebohrung im Plattensitz einschraubbaren Befestigungsschrauben zur Befestigung der Wendeplatten über ein mittiges Loch, wobei der Plattensitz eine annähernd senkrecht zur Gewindebohrung sich erstreckende erste Auflagerfläche aufweist, gegen die die Rückseite der Wendeplatten anliegen und eine zweite Auflagerfläche an der Innenseite der Spankammern, gegen die die Wendeplatten seitlich anliegt, **dadurch gekennzeichnet, daß** die Wendeplatten (2) rückseitig auf den Schneidkantenseiten erhabene längliche im Querschnitt keilförmige Stützabschnitte (40,42) aufweisen mit unteren parallel beabstandeten länglichen Stützflächen (44) und daß angrenzend an die zweite Auflagerfläche (16) im Plattensitz Ausnehmungen (12) geformt sind, deren Achsen annähernd parallel zur zweiten Auflagerfläche (16) verlaufen und die im Querschnitt komplementär zum Querschnitt der Stützabschnitte (40,42) geformt sind derart, daß der eine Stützabschnitt (40) annähernd formschlüssig in der Ausnehmung (12) aufgenommen ist und die Wendeplatte (2) beim Anziehen der Befestigungsschraube (3) aufgrund der Keilwirkung gegen die zweite Auflagerfläche (16) gedrückt wird, während sich die Stützfläche (44) des anderen Stützabschnitts (42) an einem radial äußeren Abschnitt der ersten Auflagerfläche (15) anlegt.

2. Fräser nach Anspruch 1, **dadurch gekennzeichnet, daß** die zweite Auflagerfläche (16) eine Wand der Ausnehmung (12) bildet.

3. Fräser nach Anspruch 1 oder 2, **dadurch gekennzeichnet, daß** um die Gewindebohrung (24) herum ein rechteckiger pyramidenstumpfförmiger Sockel (46) geformt ist, dessen zur zweiten Auflagerfläche (16) hin gerichtete Wand die zweite Wandfläche der Ausnehmung (12) bildet.

4. Fräser nach einem der Ansprüche 1 bis 3, **dadurch gekennzeichnet, daß** die Rückseite der Wendeplatte (2) als rechteckiger Rahmen (32) ausgebildet ist, von dem zwei gegenüberliegende Seiten die Stützabschnitte (40) bilden und die Stützflächen (44) aufweisen.

5. Fräser nach einem der Ansprüche 1 bis 4, **dadurch gekennzeichnet, daß** die Spankammer (14) eine axiale dritte Auflagerfläche (23) aufweist, gegen die eine Stirnseite (34) der Wendeplatten (2) zur Anlage gelangt.

6. Fräser nach Anspruch 5, **dadurch gekennzeichnet, daß** die Achse der Gewindebohrung (24) so angeordnet ist, daß die Befestigungsschraube (3) die Wendeplatten (2) auch gegen die dritte Auflagerfläche (23) drückt.

7. Fräser nach einem der Ansprüche 1 bis 6, **dadurch gekennzeichnet, daß** die Rückseite der Wendeplatten (2) eine im Querschnitt trapezförmige Ausnehmung (18) aufweist.

8. Fräser nach einem der Ansprüche 1 bis 7, **dadurch gekennzeichnet, daß** die Wendeplatten (2) einen großen negativen Einbauwinkel aufweisen, vorzugsweise im Bereich von 35 bis 45°.

9. Fräser nach einem der Ansprüche 1 bis 8, **dadurch gekennzeichnet, daß** die Wendeplatten (2) einen großen positiven Freiwinkel (5) und/oder Spanwinkel (6) und/oder Stimflächenfreiwinkel (13) aufweisen.

10. Fräser nach einem der Ansprüche 1 bis 9, **dadurch gekennzeichnet, daß** die Wendeplatte (2) im Fräskörper (1) mit einem großen positiven Axialwinkel eingebaut sind.

11. Fräser nach einem der Ansprüche 1 bis 10, **dadurch gekennzeichnet, daß** die Freiflächen (9) der Hauptschneidenkante ballig sind.

12. Fräser nach einem der Ansprüche 1 bis 11, **dadurch gekennzeichnet, daß** die Spanfläche (36) hohlkehlenförmig ist.

13. Fräser nach einem der Ansprüche 1 bis 12, **dadurch gekennzeichnet, daß** zwischen den Stützflächen (44) und dem Boden der Ausnehmung (12) ein Freiraum besteht.

14. Fräser nach einem der Ansprüche 1 bis 13, **dadurch gekennzeichnet, daß** die Wendeplatten (2) an den Stirnenden eine Nebenschneidkante (19) aufweisen mit Eckradius und Planfase.

## Claims

1. An indexable insert milling tool with a milling body which on the circumference comprises distanced chip spaces in which insert seats for indexable cutting inserts are formed, and with fastening screws which can be screwed into a threaded bore in the insert seat for fastening the indexable inserts via a central hole, wherein the insert seat comprises a first bearing surface extending approximately perpendicular to the threaded bore, against which the rear side of the indexable inserts bear and a second bearing surface on the inner side of the chip spaces, against which the indexable inserts laterally bear, **characterized in that** the indexable inserts (2) on the rear side on the cutting edge sides comprise raised elongate support sections (40) wedge-shaped in cross section with lower parallel spaced elongate support surfaces (44) and wherein bordering the second bearing surface (16) in the insert seat there are formed recesses (12) whose axes run approximately parallel to the second bearing surface (16) and which in cross section are formed complementarily to the cross section of the support sections (40, 42), such that the one support section (40) is accommodated in the recess (12) with an approximately positive fit and the indexable insert (2) on tightening the fastening screw (3) on account of the wedging effect is pressed against the second bearing surface (16), whilst the support surface (44) of the other support section (42) bears on a radial outer section of the first bearing surface (15).

2. The milling tool according to claim 1, **characterized in that** the second bearing surface (16) forms a wall of the recess (12).

3. The milling tool according to claim 1 or 2, **characterized in that** around the threaded bore (24) there is formed a rectangular pyramid-base-shaped base (46) whose wall directed towards the second bearing surface (16) forms the second wall surface of the recess (12).

4. The milling tool according to one of the claims 1 to 3, **characterized in that** the rear side of the indexable insert (2) is formed as a rectangular frame (32) of which two oppositely lying sides form the support sections (40) and comprise the support surfaces (44).

5. The milling tool according to one of the claims 1 to 4, **characterized in that** the chip space (14) comprises an axial third bearing surface (23) against which one end-face side (34) of the indexable insert (2) comes to bear.

6. The milling tool according to claim 5, **characterized in that** the axis of the threaded bore (24) is arranged such that the fastening screw (3) presses the indexable inserts (2) also against the third bearing surface (23).

7. The milling tool according to one of the claims 1 to 6, **characterized in that** the rear side of the indexable inserts (2) comprises a recess (18) which is trapezoidal in cross section.

8. The milling tool according to one of claims 1 to 7, **characterized in that** the indexable inserts (2) have a relatively large negative clearance angle, preferably in the range of 35° to 45°.

9. The milling tool according to one of claims 1 to 8, **characterized in that** the indexable inserts (2) have a large positive clearance angle (5) and/or rake angle and/or end-face surface clearance angle (13).

10. The milling tool according to one of the claims 1 to 9, **characterized in that** the indexable insert (2) is mounted in the milling body (1) with a large positive axial angle.

11. The milling tool according to one of claims 1 to 10, **characterized in that** the clearance surfaces (9) of the main cutting edge are spherical.

12. The milling tool according to one of the claims 1 to 11, **characterized in that** the rake face (36) is flute-shaped.

13. The milling tool according to one of the claims I to 12, **characterized in that** between the support surfaces (44) and the bottom of the recess (12) there exists a free space.

14. The milling tool according to one of the claims 1 to 13, **characterized in that** the indexable inserts (2) at the end-face ends comprise a minor cutting edge (19) with a flanging radius and plane bezel.

## Revendications

1. Fraise avec plaquettes rapportées, comprenant un corps de fraise, qui comporte des logements de copeaux, qui sont répartis à distance les uns des autres sur le pourtour et dans lesquels sont formés les logements pour les plaquettes de coupe rapportées, et des vis de fixation à visser dans une forure taraudée dans le logement de plaquette et destinées à fixer les plaquettes rapportées par l'intermédiaire d'un trou central, le logement de plaquette comportant une première surface de support, qui est sensiblement perpendiculaire à la forure taraudée et contre laquelle s'appuie la face arrière des plaquettes rapportées, et une deuxième surface de support, qui est réalisée sur la face intérieure des logements de copeaux et contre laquelle s'appuie latéralement la plaquette rapportée, **caractérisée en ce que** les plaquettes rapportées (2) comportent des zones d'appui (40, 42) allongées avec une section en forme de clavette, qui sont en relief sur la face arrière des arêtes tranchantes et qui sont munies de surfaces d'appui inférieures (44) allongées et écartées parallèlement, et **en ce que** dans le logement des plaquettes sont réalisés des évidements (12) qui sont adjacents à la deuxième surface de support (16) et dont les axes sont approximativement parallèles à la deuxième surface de support (16) et qui sont conçus avec une section complémentaire à la section des zones d'appui (40, 42), de telle sorte que l'une des zones d'appui (40) est logée pratiquement par conjugaison de forme dans l'évidement (12) et la plaquette rapportée (2) au moment du serrage de la vis de fixation (3) est poussée, en raison de l'effet de clavette, contre la deuxième surface de support (16), alors que la surface d'appui (44) de l'autre zone d'appui (42) est en appui contre une partie radialement extérieure de la première surface de support (15).

2. Fraise selon la revendication 1, **caractérisée en ce que** la deuxième surface de support (16) forme une paroi de l'évidement (12).

3. Fraise selon la revendication 1 ou 2, **caractérisée en ce que**, autour de la forure taraudée (24), est formé un socle (46) rectangulaire, en forme de pyramide tronquée, dont la paroi orientée vers la deuxième surface de support (16) forme la deuxième paroi de l'évidement (12).

4. Fraise selon l'une quelconque des revendications 1 à 3, **caractérisée en ce que** la face arrière de la plaquette rapportée (2) est conçue sous forme de cadre (32) rectangulaire, dont deux côtés face à face forment les zones d'appui (40) et comportent les surfaces d'appui (44).

5. Fraise selon l'une quelconque des revendications 1 à 4, **caractérisée en ce que** le logement de copeaux (14) comporte une troisième surface de support (23) axiale, contre laquelle vient en appui une face frontale (34) des plaquettes rapportées (2).

6. Fraise selon la revendication 5, **caractérisée en ce que** l'axe de la forure taraudée (24) est agencé de telle sorte que la vis de fixation (3) pousse les plaquettes rapportées (2) également contre la troisième surface de support (23).

7. Fraise selon l'une quelconque des revendications 1 à 6, **caractérisée en ce que** la face arrière des plaquettes rapportées (2) comporte un évidement (18) à section trapézoïdale.

8. Fraise selon l'une quelconque des revendications 1 à 7, **caractérisée en ce que** les plaquettes rapportées (2) ont un grand angle de montage négatif, de préférence dans le domaine de 35 à 45°.

9. Fraise selon l'une quelconque des revendications 1 à 8, **caractérisée en ce que** les plaquettes rapportées (2) ont un grand angle de dépouille (5) positif et/ou angle de coupe (6) et/ou angle de dépouille en face frontale (13).

10. Fraise selon l'une quelconque des revendications 1 à 9, **caractérisée en ce que** les plaquettes rapportées (2) sont montées dans le corps de fraise (1) en formant un grand angle axial positif.

11. Fraise selon l'une quelconque des revendications 1 à 10, **caractérisée en ce que** les faces de dépouille (9) de l'arête tranchante principale sont bombées.

12. Fraise selon l'une quelconque des revendications 1 à 11, **caractérisée en ce que** les faces d'attaque (36) sont réalisées en forme de gorge creuse.

13. Fraise selon l'une quelconque des revendications 1 à 12, **caractérisée en ce qu'**un espace libre est formé entre les surfaces d'appui (44) et le fond de l'évidement (12).

14. Fraise selon l'une quelconque des revendications 1 à 13, **caractérisée en ce que** les plaquettes rapportées (2), sur leurs extrémités frontales, sont munies d'une arête tranchante secondaire (19) avec un rayon de bride et un chanfrein plan.
